# NEUE EUROPÄISCHE PATENTSCHRIFT

(11) **EP 2 318 892 B2**
(45) Veröffentlichungstag und Bekanntmachung des Hinweises auf die Entscheidung über den Einspruch: **22.07.2015**
(45) Hinweis auf die Patenterteilung: 21.11.2012
(21) Anmeldenummer: 08801503.7
(22) Anmeldetag: 31.07.2008
(51) Int. Cl.: G05B 19/042, G06F 1/32

(54) **FUNKBASIERTE AKTIVIERUNG UND DEAKTIVIERUNG EINES ENERGIELOSEN STANDBY-BETRIEBS VON AUTOMATISIERUNGSSYSTEMEN**
RADIO-BASED ACTIVATION AND DEACTIVATION OF A ZERO-ENERGY STANDBY MODE OF AUTOMATION SYSTEMS
ACTIVATION ET DÉSACTIVATION PAR RADIO D'UN FONCTIONNEMENT EN MODE VEILLE SANS ÉNERGIE DE SYSTÈMES D'AUTOMATISATION

(43) Veröffentlichungstag der Anmeldung: 11.05.2011
(73) Patentinhaber: Siemens Aktiengesellschaft, 80333 München (DE)
(72) Erfinder: KYDLES, Jens, 90419 Nürnberg (DE); NEIDIG, Jörg, 90403 Nürnberg (DE)
(86) Internationale Anmeldenummer: PCT/EP2008/006323
(87) Internationale Veröffentlichungsnummer: WO 2010/012292

(56) Entgegenhaltungen:
- EP-A- 1 857 911
- EP-A- 1 936 456
- WO-A2-2006/079946
- US-A1- 2007 205 873

## Beschreibung

Die Erfindung betrifft ein Verfahren zur funkbasierten Aktivierung und Deaktivierung eines energielosen Standby-Betriebs von Automatisierungskomponenten sowie elektrischen Automatisierungskomponenten.

Automatisierungssysteme weisen verschiedenste Automatisierungskomponenten zur Ausführung von automatisierungstechnischen Aufgaben auf. Die Komponenten können beispielsweise Sensoren, Aktoren oder auch Steuerungen oder Antriebe sein. Die Automatisierungskomponenten müssen wie alle elektrischen oder elektronischen Geräte mit Energie versorgt werden, um ihre Aufgabe auszuführen. Bis auf wenige Aufnahmen wird hierzu in der Regel die Energieversorgung über Kabel, Funk oder Batterien gewährleistet. Aus zwei Gründen ist es wünschenswert, den Energieverbrauch der elektrischen und elektronischen Geräte zu senken. Zum Einen zwingen steigende Energiekosten zu einem sparsameren Stromkonsum und zum Anderen soll der Wartungsaufwand bei batteriebetriebenen Komponenten so gering wir möglich gehalten werden.

Besonders funkbasierte Systemkomponenten, welche durch eine Batterie mit Strom versorgt werden, haben oft nur eine sehr begrenzte Betriebsdauer. Als Beispiel seien hier Sensor/Aktor-Netzwerke in Automatisierungssystemen genannt. Hierbei handelt es sich um eine Vielzahl kleiner, intelligenter, miteinander vernetzter Sensor/Aktor-Knoten, welche als Verbund komplexe Aufgaben ausführen und mittels Funkverbindung miteinander kommunizieren können. Diese Komponenten konsumieren fortwährend Energie, außer sie werden explizit (manuell) über einen Schalter deaktiviert.

Heutzutage werden aktive funkbasierte Komponenten in der Regel über einen Schalter durch das Verbinden mit der Energiequelle (Einlegen von Batterien) mit Strom versorgt. Es existieren verschiedene Mechanismen zur Energieeinsparung in Abhängigkeit von Verbindungsqualität oder Auslastung. Ein Standby der keine Energie benötigt, existiert bei funkbasierten Geräten (z.B. bei Geräten die über Funk-, Infrarot oder ähnliche Techniken fernbedienbar sind) nicht. Werden die Elemente nicht von der Energiequelle getrennt, beispielsweise durch einen Schalter oder das Herausnehmen der Energiequelle, so hat das einen kontinuierlichen Energieverbrauch zur Folge.

Die US 2007/0205873 A1 beschreibt ein Verfahren zur Aktivierung eines RFID-Tags. Hierbei wird ein passiver RFID-Tag mit Hilfe der Energie, die in dem Funksignal, welches an den RFID-Tag gesendet wird, aktiviert. Der RFID-Tag aktiviert dann einen Schaltkreis, der sich auf Grund einer Batterie selbstständig mit Energie versorgen kann. Es erfolgt mit Hilfe des beschriebenen Verfahrens jedoch lediglich die Aktivierung des RFID-Tags selbst.

Die EP 1 857 911 A1 beschreibt ein Verfahren zum Steuern eines elektronischen Geräts der Unterhaltungselektronik. Die Ansteuerung erfolgt dabei derart, dass ein leistungsloser Standby-Betrieb erreicht wird. Es wird beschrieben, dass dieser Standby-Betrieb dadurch beendet werden kann, dass ein entsprechendes Radiosignal empfangen wird, welches auch die erforderliche Leistung zum Beenden des Standby-Betriebs zur Verfügung stellt.

Die WO2006/079946A2 - Hilgers et al. "A sensor circuit array, a control device for operating a sensor circuit array, and a sensor system" zeigt einzelne Automatisierungskomponenten, die funkgesteuert durch eine Basisstation aktivierbar und deaktivierbar sind.

Die Aufgabe der vorliegenden Erfindung besteht daher darin, Automatisierungskomponenten vorzuschlagen, die in einer verbesserten Betriebsweise über Funk in einen energielosen Standby-Betrieb verset- zt und aus einem energielosen Standby-Betrieb über Funk wieder aktiviert werden können.

Die Aufgabe wird gelöst durch ein Verfahren zur funkbasierten Aktivierung und Deaktivierung gemäß dem Patentanspruch 1, eine Automatisierungskomponente gemäß Patentanspruch 9, und ein System gemäß Patentanspruch 15.

Der Erfindung liegt die Erkenntnis zugrunde, dass eine passive Einheit bzw. ein passives Element, wie beispielsweise ein RFID-Tag über Funk angesprochen werden kann und dass hierbei ausreichend Energie mit dem Funksignal übertragen wird, um einen mit der passiven Einheit gekoppelten elektronischen Schalter zu betätigen. Hierbei ist der Schalter in einen Stromkreis eingefügt, mittels dessen eine funktionale Einheit, die als Verbraucher fungiert, mit einer Energieversorgung, beispielsweise einer Batterie verbunden ist.

Wird über das Funksignal nun der Schalter betätigt, so kann beispielsweise der Stromkreis geschlossen oder geöffnet werden und die Energiezufuhr aus der Stromquelle, also beispielsweise der Batterie, für die funktionale Einheit einer Automatisierungskomponente wird unterbrochen (bei Öffnen des Schalters) bzw. wiederhergestellt (bei Schließen des Schalters). Die funktionale Einheit der Automatisierungskomponente kann somit auf einfache Weise durch Übertragung eines Funksignals in einen Standby-Modus versetzt werden oder aus einem Standby-Modus wieder reaktiviert werden. Hierbei ist dadurch, dass der Schalter die funktionale Einheit im Standby-Modus von der Energieversorgung trennt, die Versetzung in einen Standby-Modus möglich, bei dem gar keine Energie von der funktionalen Einheit verbraucht wird. Die passive Einheit selbst benötigt hierbei keine Energieversorgung, so dass die gesamte Automatisierungskomponente mit der funktionalen Einheit und der passiven Einheit im Standby-Modus vollkommen ohne Energieverbrauch auskommt. Die zur Reaktivierung notwendige Energie kann ausschließlich mittels des Funksignals übertragen werden. Nach der Aktivierung des passiven Elementes und der Betätigung des Schalters wird somit die eigentliche funktionale Einheit über die Energiequelle versorgt.

Besonders vorteilhaft ist hierbei die Energieeinsparung, da im Standby-Betrieb überhaupt keine Energie von der funktionalen Einheit mehr verbraucht wird. Des Weiteren ist eine Erhöhung der Betriebsdauer bei Verwendung einer internen Energiequelle gegeben. Die Energie einer Batterie wird nicht so schnell verbraucht wie im Normalfall, wenn eine Automatisierungskomponente bzw. ein elektrisches Gerät im Standby-Modus trotzdem Energie verbraucht. Es ist zudem kein manueller Eingriff durch einen Benutzer notwendig, da das System bei nicht-Gebrauch einzelner Komponenten diese gezielt selbst e-nergielos schalten und Reaktivieren kann. Die Automatisierungskomponenten sind somit autark und können ohne Anwendung über Kabel installiert werden.

Eine weitere vorteilhafte Ausbildung der Erfindung ist dadurch gekennzeichnet, dass die Energieversorgung durch einen CMOS-Schalter unterbrochen oder wiederhergestellt wird. Bei einem CMOS-Schalter handelt es sich um ein Halbleiterelement, welches eine besonders niedrige Energieschwelle aufweist, um zu schalten. Die Schaltung erfolgt auf elektronische Weise, so dass kein mechanischer Verschleiß erfolgt.

Eine weitere vorteilhafte Ausbildung der Erfindung ist dadurch gekennzeichnet, dass das Funksignal von einem RFID-Tag empfangen wird. Hierbei ist vorteilhaft, dass ein einfaches Standardbauteil, welches ohnehin zum Empfang von Funksignalen vorgesehen ist, für die drahtlose Aktivierung bzw. Deaktivierung der Automatisierungskomponente verwendet werden kann.

Eine weitere vorteilhafte Ausbildung der Erfindung ist dadurch gekennzeichnet, das Sensor/Aktor-Knoten eines Sensornetzwerkes aktiviert und deaktiviert werden. Insbesondere in Automatisierungssystemen, in denen viele Sensoren auf der Anlage verteilt sind, welche wiederum zu Netzwerken zusammengefasst sind, ist eine Verkabelung für die Stromversorgung extrem aufwändig. Derartige Sensoren werden somit häufig mittels einer autarken Energiequelle versorgt. Um hier eine Langlebigkeit der Sensoren und Aktoren auf der Anlage zu gewährleisten, ist es besonders von Vorteil, wenn diese Automatisierungskomponenten in einen energielosen Standby-Betrieb versetzt werden können und somit eine energiesparende Möglichkeit der Energieversorgung gegeben ist, was zu den bereits genannten Vorteilen von Langlebigkeit, Energieeinsparung und geringen Wartungsaufwänden führt.

Eine weitere vorteilhafte Ausbildung der Erfindung ist dadurch gekennzeichnet, dass mit dem Funksignal ein spezifisches Signal zur Aktivierung und Deaktivierung der funktionalen Einheit übertragen wird. Damit die Automatisierungskomponente bzw. die funktionale Einheit der Automatisierungskomponente aktiviert bzw. deaktiviert wird, ist in dieser vorteilhaften Ausbildung nicht nur die notwendige Energie zur Betätigung des Schalters ausreichend, sondern es wird vielmehr verlangt, dass ein weiteres Signal gesendet wird, welches anzeigt, dass von der Automatisierungskomponente bzw. der funktionalen Einheit eine Reaktion erwartet wird. Hierdurch wird gewährleistet, dass die Automatisierungskomponente nicht deaktiviert oder aktiviert wird, wenn lediglich Energie fließt und eine Aktivierung oder Deaktivierung überhaupt nicht gewollt war.

Eine weitere vorteilhafte Ausbildung der Erfindung ist dadurch gekennzeichnet, dass mit dem Funksignal eine ID übertragen wird und dass die funktionale Einheit aktiviert oder deaktiviert wird, wenn die übertragene ID mit einer ID der Automatisierungskomponente übereinstimmt. Hierdurch wird auf einfache Weise gewährleistet, dass in einem Automatisierungssystem, in dem viele Automatisierungskomponenten mit Hilfe des Verfahrens aktiviert und deaktiviert werden und viele Automatisierungskomponenten ihrerseits wieder Funksignale aussenden, nur diejenigen Automatisierungskomponenten aktiviert werden, die ein entsprechendes Identifikationssignal bzw. eine Kennung empfangen, die mit der ihren übereinstimmt. Dadurch wird gewährleistet, dass Automatisierungskomponenten individuell angesprochen und aktiviert werden können, und dass Automatisierungskomponenten, die nicht reagieren sollen entsprechend passiv bleiben.

Eine weitere vorteilhafte Ausbildung der Erfindung ist dadurch gekennzeichnet, dass die Automatisierungskomponente Daten über Funk sendet und empfängt, sobald die funktionale Einheit aktiv ist. Die Automatisierungskomponente wird somit nicht lediglich über Funksignale und die damit übertragene Energie aktiviert und deaktiviert, sie nutzt die Funkmöglichkeit auch zur allgemeinen Kommunikation mit anderen Automatisierungskomponenten bzw. mit der zentralen Steuerung des Automatisierungssystems, wodurch eine allgemeine Kommunikation ermöglicht wird, die auf der gleichen Infrastruktur basiert, wie das Verfahren zur Aktivierung und Deaktivierung der Automatisierungskomponente. Hierdurch wird der infrastrukturelle Aufwand größstmöglich minimiert.

Erfindungsgemäß kommunizieren mehrere Automatisierungskomponenten über Funksignale miteinander, so dass sich die Automatisierungskomponenten gegenseitig mittels der Funksignale aktivieren und deaktivieren. Die Aktivierung und Deaktivierung muss somit nicht von einer zentralen Stelle aus erfolgen. Bei einer Verteilung der Automatisierungskomponenten über die Anlage über eine größere Fläche können die Automatisierungskomponenten, wenn sie gegenseitig in Reichweite für die Funksignale sind, autark für eine Aktivierung und Deaktivierung benachbarter Automatisierungskomponenten sorgen.

Eine weitere vorteilhafte Ausbildung der Erfindung ist dadurch gekennzeichnet, dass mehrere Sensor/Aktor-Knoten ein Sensor/Aktor-Netzwerk bilden. Durch die Bildung dieser Netzwerke können ganze Gruppen von Automatisierungskomponenten, in diesen Sensor/Aktor-Knoten eines Netzwerks kaskadenartig durch ihre benachbarten Komponenten aktiviert und deaktiviert werden.

Eine weitere vorteilhafte Ausbildung der Erfindung ist dadurch gekennzeichnet, dass mindestens zwei Sensor/Aktor-Netzwerke unterschiedliche Automatisierungsaufgaben haben und dass die funktionale Einheit mindestens eine Automatisierungskomponente des zweiten Sensor/Aktor-Netzwerkes durch den Empfang eines Funksignals von einer Automatisierungskomponente des ersten Sensor/Aktor-Netzwerkes aktiviert wird. Dies ergibt die Möglichkeit, dass verschiedene Sensor/Aktor-Netzwerke, die beispielsweise unterschiedliche Aufgaben auf einer Fertigungsanlage haben, nacheinander aktiviert werden. Beispielsweise kann in einem Sensornetzwerk erst eine bestimmte Automatisierungsaufgabe vollständig abgearbeitet werden und das zweite Sensornetzwerk wird durch eine Automatisierungskomponente, die sich innerhalb des ersten Sensornetzwerkes befindet und in diesem Sensornetzwerk die Information empfängt, dass das zweite Sensornetzwerk jetzt aktiviert werden soll, durch die Übertragung eines entsprechenden Funksignals in einer Automatisierungskomponente des zweiten Sensor/Aktor-Netzwerkes aktiviert werden. Die Aktivierung lediglich einer Automatisierungskomponente im zweiten Netzwerk ist dann ausreichend, um im zweiten Netzwerk wieder eine Kettenreaktion auszulösen, und alle an dem Netzwerk beteiligten Automatisierungskomponenten zu aktivieren.

Weitere vorteilhafte Ausbildungen der Erfindung sind in den Unteransprüchen angegeben.

Im Folgenden wird die Erfindung anhand der Figuren näher beschrieben und erläutert. Dabei zeigen:
- FIG 1: einen schematischen Aufbau einer elektrischen Automatisierungskomponente,
- FIG 2: ein Automatisierungssystem mit zwei Sensor/Aktor-Knoten Netzwerken,
- FIG 3: ein Beispiel eines elektronischen Schalters.

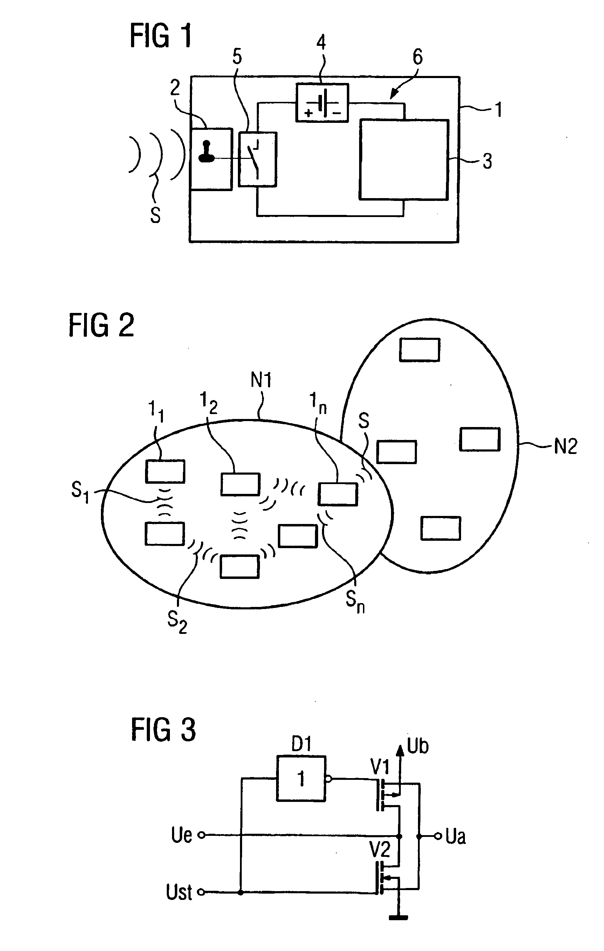

FIG 1 zeigt den schematischen Aufbau einer elektrischen Automatisierungskomponente 1. Die Automatisierungskomponente verfügt über eine funktionale Einheit 3 und eine passive Einheit 2. Die funktionale Einheit ist zur Ausführung von Automatisierungsaufgaben vorgesehen. Bei der funktionalen Einheit kann es sich beispielsweise um einen Sensor oder einen Aktor handeln. Die funktionale Einheit benötigt für die Ausführung ihrer Aufgaben eine Stromversorgung. Diese wird in der Automatisierungskomponente 1 direkt bereit gestellt. In dem vorliegenden Ausführungsbeispiel handelt es sich um eine lokale Energiequelle 4, die beispielsweise als Batterie ausgebildet ist. Durch die Energiequelle 4 wird die funktionale Einheit mit der notwendigen Energie versorgt. In den Stromkreislauf 6 der aus der funktionalen Einheit und der Batterie gebildet wird, ist ein Schalter 5 eingefügt. Bei dem Schalter handelt es sich um einen elektronischen Schalter, beispielsweise einen CMOS-Schalter, also beispielsweise um einen Schalter der als Halbleiterelement ausgebildet ist. Ist der elektronische Schalter geöffnet, so wird die funktionale Einheit nicht mit Energie versorgt. Sie ist in einem Standby-Betrieb, in dem sie keine Energie verbraucht. Sie kann in diesem Betrieb jedoch auch keine Automatisierungsaufgaben ausführen. Die Automatisierungskomponente 1 verfügt weiterhin über eine passive Komponente bzw. eine passive Einheit 2. Hierbei kann es sich um einen RFID-Tag handeln, der als passiver RFID-Tag ausgebildet ist. Der RFID-Tag ist mit dem elektronischen Schalter verbunden bzw. gekoppelt. Empfängt der RFID-Tag ein Funksignal, so wird mit diesem Funksignal auch Energie an den RFID-Tag übertragen. Der passive RFID-Tag wird aktiviert und die empfangene Energie wird an den elektronischen Schalter 5 weitergeleitet, wodurch der Schalter betätigt werden kann. Durch den Empfang des Funksignals kann der Schalter geschlossen werden und die funktionale Einheit der Automatisierungskomponente wird anschließend mit Energie aus der Batterie versorgt. Nunmehr ist die gesamte Automatisierungskomponente in einem aktiven Zustand und kann Automatisierungsaufgaben ausführen. Mittels eines weiteren Funksignals kann der elektronische Schalter wieder geöffnet werden und die Automatisierungskomponente wird wieder in einen Standby-Betrieb versetzt, in dem sie keine Energie verbraucht. Eine einfache Aktivierung und Deaktivierung über das Versenden eines Funksignals bzw. von der Automatisierungskomponente aus gesehen durch den Empfang eines Funksignals mit der darin enthaltenen Energie ist auf diese Weise möglich.

Zusätzlich zur Energie überträgt das Funksignal auch Daten an die Automatisierungskomponente. Es können hierbei Nutzdaten übertragen werden aber auch Signale, die neben der Energie beispielsweise eine Aktivierungs- bzw. Deaktivierungsinformation enthalten oder eine Identifizierung, beispielsweise eine Kennung für eine bestimmte Automatisierungskomponente, so dass die Automatisierungskomponente nur reagiert, wenn ihre eigene Kennung mit der übertragenen Kennung übereinstimmt.

FIG 2 zeigt einen schematischen Aufbau eines Automatisierungssystems mit zwei Sensor/Aktor-Netzwerken. Die Netzwerke können hierbei unterschiedliche Automatisierungsaufgaben ausführen. Die einzelnen Komponenten der Netzwerke N1,N2 sind hierbei elektrische Automatisierungskomponenten 1_{1...n}, die über die beschriebene Funktionalität verfügen und die in einen energielosen Standby-Betrieb versetzt werden können und aus diesem mittels Funksignalen auch wieder aktiviert werden können. In dem Beispiel handelt es sich um Sensor/Aktor-Knoten A bis F eines ersten Sensornetzwerkes N1 und um Sensor/Aktor-Knoten eines zweiten Netzwerkes N2 eines Automatisierungssystems. In dem ersten Sensor/Aktor-Netzwerk N1 kann jeder Knoten mit jedem anderen Knoten kommunizieren, ist mit Sensor/Aktor-Funktionalität ausgestattet und besitzt je nach Ausführung entsprechende Verarbeitungsalgorithmen. Die Energieversorgung der einzelnen Knoten wird hier durch eine Batterie, die die einzelnen Knoten als Automatisierungskomponenten beinhalten, bereit gestellt. Im ersten Sensor/Aktor-Netzwerk N1 sind beispielsweise die Knoten A, B, C, D und F aktiviert. Wird erkannt, dass der Knoten E aktiviert werden soll, dann wird dieser durch Ausstrahlung eines Funksignales einer der anderen Knoten aktiviert. Eine Deaktivierung eines Knotens erfolgt entsprechend oder auch durch den Knoten selber. Hierbei wird, wie bereits erläutert, der jeweilige Sensor/Aktor-Knoten in einen energielosen Standby-Modus versetzt, da er vollständig abgeschaltet wird und kein weiterer Energieverbrauch erfolgt. Die An- und Abschaltung erfolgt lediglich über das Funksignal der anderen Knoten, wobei ausreichend Energie zur Betätigung des elektronischen Schalters im Knoten und zur Aktivierung des Hauptstromkreises (Batterie und funktionale Einheit) zur Verfügung gestellt wird. Die dafür notwendige Energie wird von einem oder mehreren Knoten bzw. Automatisierungskomponenten in Reichweite in Form von elektromagnetischen Wellen oder magnetischen Feldern (induktive Kopplung) zur Verfügung gestellt. Diese Energie muss lediglich bis zur Aktivierung des Hauptstromkreises zur Verfügung gestellt werden, anschließend kann jeder Knoten autark durch die lokale Energieversorgung betrieben werden.

FIG 2 zeigt ein weiteres Sensor/Aktor-Netzwerk N2, welches zu einem bestimmten Zeitpunkt auf der Automatisierungsanlage nicht benötigt wird, da es keine Automatisierungsaufgaben ausführen muss. Beispielsweise kann ein bestimmtes Netzwerk erst relevant werden, wenn andere Netzwerke ihre Arbeit fast oder vollständig erledigt haben. In diesem Fall ist es von Vorteil, wenn das Netzwerk erst dann aktiviert wird, wenn es seine Arbeit auch ausführen soll. In diem Beispiel besteht das zweite Netzwerk aus den Knoten H, I, J und K. Das System soll erst mit seinen Sensor/Aktor-Knoten aktiviert werden, wenn durch das System auch etwas abgearbeitet werden soll. Hierzu ist das System mit mindestens einem aktiven Knoten aus dem Sensor/Aktor-Netzwerk 1 verbunden. Dieser Knoten, beispielsweise Knoten F liefert dann die Aktivierungsenergie für mindestens einen Knoten H des Sensor/Aktor-Netzwerks N2. Ist ein Knoten des zweiten Sensor/Aktor-Netzwerks N2 aktiviert, so kann dieser das gesamte System aktivieren, da jeder aktivierte Knoten seinerseits mit weiteren Knoten Funksignale austauschen kann und bei der Übertragung dieser Funksignale auch die notwendige Energie weiterer Knoten bzw. Automatisierungskomponenten des zweiten Sensor/Aktor-Netzwerks bereitgestellt wird. Ist das gesamte Sensor/Aktor-Netzwerk aktiviert, so kann die Automatisierungsaufgabe ausgeführt werden. Wird das gesamte System nicht mehr benötigt, kann dieses wieder in den Standby-Modus geschaltet werden. Eine Aktivierung ganzer Sensor/Aktor-Netzwerke und deren Deaktivierung ist somit ohne den Eingriff durch den Systembetreiber möglich. Die Aktivierung und Deaktivierung erfolgt sehr schnell, da die Funksignale ohne Zeitverzögerung übertragen werden und durch die kaskardierende Aktivierung einer großen Anzahl von Knoten ein schnelles Hochfahren eines gesamten Sensor/Aktor-Netzwerk möglich ist. Das gesamte System ist energieeffizient, da ein energieloser Standby-Zustand für die Automatisierungskomponenten geschaffen wird und es wird insgesamt der Wartungsaufwand für derartige Automatisierungssysteme minimiert.

In FIG 3 ist ein beispielhafter Schaltplan für die Realisierung eines elektronischen Schalters 5 in CMOS-Ausführung gezeigt.

## Patentansprüche

1. Verfahren zur funkbasierten Aktivierung und Deaktivierung eines energielosen Standby-Betriebs von Automatisierungskomponenten (1), bei dem
- eine als RFID-Tag ausgebildete passive Einheit (2) der Automatisierungskomponente ein Funksignal (S) empfängt,
- mit dem Funksignal (S) übertragene Energie zur Betätigung eines elektronischen Schalters (5) verwandet wird und
- durch die Betätigung des elektronischen Schalters (5) eine Energieversorgung einer funktionalen Einheit (3) der Automatisierungskomponente (1) unterbrochen oder wiederhergestellt wird, wodurch die funktionale Einheit (3) der Automatisierungskomponente (1) aktiviert oder deaktiviert wird,
**dadurch gekennzeichnet,**
**dass** mehrere Automatisierungskomponenten (1_{1...n}) über Funksignale (S_{1...n}) miteinander kommunizieren und sich die Automatisierungskomponenten (1_{1...n}) gegenseitig mittels der Funksignale (S_{1...n}) aktivieren und deaktivieren.

2. Verfahren nach Anspruch 1, bei dem die Energieversorgung durch einen CMOS-Schalter unterbrochen oder wiederhergestellt wird.

3. Verfahren nach Anspruch 1 oder 2, bei dem die als Sensor/Aktor-Knoten eines Sensornetzwerkes ausgebildeten funktionalen Einheiten (3) aktiviert und deaktiviert werden.

4. Verfahren nach einem der Ansprüche 1 bis 3, bei dem mit dem Funksignal (S) ein spezifisches Signal zur Aktivierung und Deaktivierung der funktionalen Einheit (3) übertragen wird.

5. Verfahren nach einem der Ansprüche 1 bis 4, bei dem mit dem Funksignal (S) eine ID übertragen wird und bei dem die funktionale Einheit (3) aktiviert oder deaktiviert wird, wenn die übertragene ID mit einer ID der Automatisierungskomponente (1) übereinstimmt.

6. Verfahren nach einem der Ansprüche 1 bis 5, bei dem die Automatisierungskomponente (1) Daten über Funk sendet und empfängt, sobald die funktionale Einheit (3) aktiv ist.

7. Verfahren nach einem der Ansprüche 1 bis 6, bei dem mehrere Sensoren/Aktor Knoten ein Sensor/Aktor-Netzwerk bilden.

8. Verfahren nach einem der Ansprüche 1 bis 7, bei dem mindestens zwei Sensor/Aktor Netzwerke (N1,N2) unterschiedliche Automatisierungsaufgaben haben und bei dem die funktionale Einheit (3) mindestens einer Automatisierungskomponente (1) des zweiten Sensor/Aktor Netzwerkes (N2) durch den Empfang eines Funksignals (S) von einer Automatisierungskomponente (1) des ersten Sensor/Aktor Netzwerks (N1) aktiviert wird.

9. Elektrische Automatisierungskomponente (1) mit
- einer passiven Einheit (2), welche zum Empfang eines Funksignals (S) vorgesehen ist,
- einer funktionalen Einheit (3) zur Ausführung von Automatisierungsfunktionalität,
- einer lokalen Energiequelle (4) zur Versorgung der funktionalen Einheit (3) und
- einem zwischen der Energiequelle (4) und der funktionalen Einheit (3) angeordneten elektronischen Schalter (5),
- wobei der elektronische Schalter (5) derart mit der passiven Einheit (2) gekoppelt ist, dass von der passiven Einheit (2) mit dem Funksignal (S) empfangene Energie zur Betätigung des elektronischen Schalters (5) führt, wodurch die funktionale Einheit (3) der Automatisierungskomponente aktivierbar und deaktivierbar ist,
- wobei die passive Einheit (2) als RFID-Tag ausgebildet ist,
**dadurch gekennzeichnet,**
**dass** die Automatisierungskomponente (1_{1...n}) derart ausgestaltet ist, dass mehrere Automatisierungskomponenten (1_{1...n}) über Funksignale (S_{1...n}) miteinander kommunizieren und sich die Automatisierungskomponenten (1_{1...n}) gegenseitig mittels der Funksignale (S_{1...n}) aktivieren und deaktivieren.

10. Automatisierungskomponente nach Anspruch 9, wobei der elektronische Schalter (5) als CMOS-Schalter ausgebildet ist.

11. Automatisierungskomponente nach Anspruch 9 oder 10, wobei die funktionale Einheit (3) als Sensor/Aktor-Knoten eines Sensornetzwerkes ausgebildet ist.

12. Automatisierungskomponente nach einem der Ansprüche 9 bis 11, wobei ein spezifisches Signal zur Aktivierung und Deaktivierung der funktionalen Einheit (3) vorgesehen ist, wobei das spezifische Signal mit dem Funksignal (S) übertragbar ist.

13. Automatisierungskomponente nach einem der Ansprüche 9 bis 12, wobei die Automatisierungskomponente (1) eine ID aufweist und wobei die Aktivierung und Deaktivierung der funktionalen Einheit (3) bei Übereinstimmung einer mit dem Funksignal (S) übertragenen ID mit der ID der Automatisierungskomponente (1) vorgesehen ist.

14. Automatisierungskomponente nach einem der Ansprüche 9 bis 13, wobei die Automatisierungskomponente (1) zum Empfang und zum Senden von Daten über Funk vorgesehen ist, sobald der elektronische Schalter (5) geschlossen ist und die funktionale Einheit (3) aktiv ist.

15. System bestehend aus Automatisierungskomponenten (1_{1...n}) gemäß einem der Ansprüche 9 bis 14,
- wobei die Automatisierungskomponenten (1_{1...n}) zur Kommunikation untereinander über Funksignale (S_{1...n}) vorgesehen sind und
- wobei Funksignale (S_{1...n}) zur gegenseitigen Aktivierung und Deaktivierung der Automatisierungskomponenten (1_{1...n}) vorgesehen sind.

16. System nach Anspruch 15, wobei die Automatisierungskomponente (1_{1...n}) als Sensor/Aktor-Knoten eines Sensor/Aktor-Netzwerks (N1/N2) ausgebildet sind.

17. System nach Anspruch 15 oder 16, mit mindestens zwei Sensor/Aktor-Netzwerken (N1,N2), wobei die Sensor/Aktor-Netzwerke zur Ausführung unterschiedlicher Automatisierungsaufgaben vorgesehen sind und wobei die funktionale Einheit (3) mindestens einer Automatisierungskomponente (1) des zweiten Sensor/Aktor-Netzwerkes (N2) zur Aktivierung durch Empfang eines Funksignals (S) von einer Automatisierungskomponente (1) des ersten Sensor/Aktor-Netzwerkes (N1) vorgesehen ist.

## Claims

1. Method for radio-based activation and deactivation of zero-energy standby operation of automation components (1), in which
- a passive unit (2), in the form of an RFID tag, of the automation component receives a radio signal (S),
- energy which is transmitted with the radio signal (S) is used to operate an electronic switch (5), and
- a power supply to a functional unit (3) of the automation component (1) is interrupted or recreated by the operation of the electronic switch (5), by which means the functional unit (3) of the automation component (1) is activated or deactivated,
**characterized**
**in that** a plurality of automation components (1_{1...n}) communicate with one another via radio signals (S_{1...n}), and the automation components (1_{1...n}) activate and deactivate one another by means of the radio signals (S_{1...n}).

2. Method according to Claim 1, in which the power supply is interrupted or recreated by a CMOS switch.

3. Method according to Claim 1 or 2, in which the functional units (3) in the form of sensor/actuator nodes of a sensor network are activated and deactivated.

4. Method according to one of Claims 1 to 3, in which a specific signal for activation and deactivation of the functional unit (3) is transmitted with the radio signal (S).

5. Method according to one of Claims 1 to 4, in which an ID is transmitted with the radio signal (S), and in which the functional unit (3) is activated or deactivated when the transmitted ID matches an ID of the automation component (1).

6. Method according to one of Claims 1 to 5, in which the automation component (1) sends and receives data by radio, as soon as the functional unit (3) is active.

7. Method according to one of Claims 1 to 6, in which a plurality of sensor/actuator nodes form a sensor/actuator network.

8. Method according to one of Claims 1 to 7, in which at least two sensor/actuator networks (N1, N2) have different automation tasks, and in which the functional unit (3) of at least one automation component (1) in the second sensor/actuator network (N2) is activated by the reception of a radio signal (S) from an automation component (1) in the first sensor/actuator network N1.

9. Electrical automation component (1) having
- a passive unit (2) which is intended to receive a radio signal (S),
- a functional unit (3) for carrying out an automation functionality,
- a local power source (4) for supplying the functional unit (3) and
- an electronic switch (5), which is arranged between the power source (4) and the functional unit (3),
- wherein the electronic switch (5) is coupled to the passive unit (2) such that energy received by the passive unit (2) with the radio signal (S) leads to operation of the electronic switch (5), by which means the functional unit (3) of the automation component can be activated and deactivated,
- wherein the passive unit (2) is in the form of an RFID tag,
**characterized**
**in that** the automation component (1_{1...n}) is configured such that a plurality of automation components (1_{1...n}) communicate with one another via radio signals (S_{1...n}), and the automation components (1_{1...n}) activate and deactivate one another by means of the radio signals (S_{1...n}).

10. Automation component according to Claim 9, wherein the electronic switch (5) is in the form of a CMOS switch.

11. Automation component according to Claim 9 or 10, wherein the functional unit (3) is in the form of a sensor/actuator node of a sensor network.

12. Automation component according to one of Claims 9 to 11, wherein a specific signal is provided for activation and deactivation of the functional unit (3), wherein the specific signal can be transmitted with the radio signal (S).

13. Automation component according to one of Claims 9 to 12, wherein the automation component (1) has an ID, and wherein the activation and deactivation of the functional unit (3) are intended when an ID which is transmitted with the radio signal (S) matches the ID of the automation component (1).

14. Automation component according to one of Claims 9 to 13, wherein the automation component (1) is intended to receive and to send data by radio, as soon as the electronic switch (5) is closed and the functional unit (3) is active.

15. System comprising automation components (1_{1...n}) according to one of Claims 9 to 14,
- wherein the automation components (1_{1...n}) are intended to communicate with one another by radio signals (S_{1...n}), and
- wherein radio signals (S_{1...n}) are intended for mutual activation and deactivation of the automation components (1_{1...n}).

16. System according to Claim 15, wherein the automation components (1_{1...n}) are in the form of sensor/actuator nodes in a sensor/actuator network (N1/N2).

17. System according to Claim 15 or 16, having at least two sensor/actuator networks (N1/N2), wherein the sensor/actuator networks are intended to carry out different automation tasks, and wherein the functional unit (3) of at least one automation component (1) in the second sensor/actuator network (N2) is intended to be activated by reception of a radio signal (S) from an automation component (1) in the first sensor/actuator network (N1).

## Revendications

1. Procédé d'activation de désactivation par radio d'un fonctionnement en mode veille sans énergie de composants (1) d'automatisation, dans lequel
- une unité (2) passive, constituée en étiquette RFID du composant d'automatisation, reçoit un signal (S) radio,
- on utilise l'énergie transmise par le signal (S) radio pour l'actionnement d'un commutateur (5) électronique,
- par l'actionnement du commutateur (5) électronique on interrompt ou on rétablit l'alimentation en énergie d'une unité (3) fonctionnelle du composant (1) d'automatisation, l'unité (3) fonctionnelle du composant (1) d'automatisation étant ainsi activée ou désactivée,
**caractérisé en ce que**
plusieurs composants (1_{1...n}) d'automatisation communiquent entre eux par des signaux (S_{1...n}) radio et dans lequel les composants (1_{1...n}) d'automatisation s'activent et se désactivent réciproquement au moyen des signaux (S_{1...n}) radio.

2. Procédé suivant la revendication 1, dans lequel on interrompt ou on rétablit l'alimentation en énergie par un commutateur CMOS.

3. Procédé suivant la revendication 1 ou 2, dans lequel on active et on désactive les unités (3) fonctionnelles constituées en noeuds de capteur/actionneur d'un réseau de capteurs.

4. Procédé suivant l'une des revendications 1 à 3, dans lequel on transmet par le signal (S) radio un signal spécifique d'activation et de désactivation de l'unité (3) fonctionnelle.

5. Procédé suivant l'une des revendications 1 à 4, dans lequel on transmet par le signal (S) radio une ID et dans lequel on active ou on désactive l'unité (3) fonctionnelle si l'ID transmise correspond à une ID du composant (1) d'automatisation.

6. Procédé suivant l'une des revendications 1 à 5, dans lequel le composant (1) d'automatisation envoie et reçoit des données par radio dès que l'unité (3) fonctionnelle est active.

7. Procédé suivant l'une des revendications 1 à 6, dans lequel plusieurs noeuds de capteur/actionneur forment un réseau de capteur/actionneur.

8. Procédé suivant l'une des revendications 1 à 7, dans lequel au moins deux réseaux (N1, N2) de capteur/actionneur ont des tâches d'automatisation différentes et dans lequel l'unité (3) fonctionnelle d'au moins un composant (1) d'automatisation du deuxième réseau (N2) de capteur/actionneur est activée par la réception d'un signal (S) radio d'un composant (1) d'automatisation du premier réseau (N1) de capteur/actionneur.

9. Composant (1) électrique d'automatisation comprenant
- une unité (2) passive qui est prévue pour la réception d'un signal (S) radio,
- une unité (3) fonctionnelle pour la réalisation d'une fonctionnalité d'automatisation,
- une source (4) locale d'énergie pour l'alimentation de l'unité (3) fonctionnelle et
- un commutateur (5) électronique monté entre la source (4) d'énergie et l'unité (3) fonctionnelle,
- dans lequel le commutateur (5) électronique est couplé à l'unité (2) passive de manière à ce que de l'énergie reçue par le signal (S) radio de l'unité (2) passive conduise à l'actionnement du commutateur (5) électronique, l'unité (3) fonctionnelle du composant d'automatisation pouvant être ainsi activée et désactivée,
- dans lequel l'unité (2) passive est constituée en étiquette RFID
**caractérisé en ce que**
le composant (1_{1...n}) d'automatisation est conformé de manière à ce que plusieurs composants (1_{1...n}) d'automatisation communiquent entre eux par des signaux (S_{1...n}) radio et dans lequel les composants (1_{1...n}) d'automatisation s'activent et se désactivent réciproquement au moyen des signaux (S_{1...n}) radio.

10. Composant d'automatisation suivant la revendication 9, dans lequel le commutateur (5) électronique est constitué sous la forme d'un commutateur CMOS.

11. Composant d'automatisation suivant la revendication 9 ou 10, dans lequel l'unité (3) fonctionnelle est constituée sous la forme d'un noeud de capteur/actionneur d'un réseau de capteur.

12. Composant d'automatisation suivant l'une des revendications 9 à 11, dans lequel il est prévu un signal spécifique d'activation et de désactivation de l'unité (3) fonctionnelle, le signal spécifique pouvant être transmis par le signal (S) radio.

13. Composant d'automatisation suivant l'une des revendications 9 à 12, dans lequel le composant (1) d'automatisation a une ID et dans lequel l'activation et la désactivation de l'unité (3) fonctionnelle est prévue s'il y a coïncidence d'une ID transmise par le signal (S) radio avec l'ID du composant (1) d'automatisation.

14. Composant d'automatisation suivant l'une des revendications 9 à 13, dans lequel le composant (1) d'automatisation est prévu pour la réception et l'émission de données par radio dès que le commutateur (5) électronique est fermé et que l'unité (3) fonctionnelle est active.

15. Système constitué de composant (1_{1...n}) d'automatisation suivant l'une des revendications 9 à 14,
- dans lequel les composants (1_{1...n}) d'automatisation sont prévus pour la communication entre eux par des signaux (S_{1...n}) radio, et
- dans lequel il est prévu des signaux (S_{1...n}) radio pour l'activation et la désactivation réciproque des composants (1_{1...n}) d'automatisation.

16. Système suivant la revendication 15, dans lequel les composants (1_{i...n}) d'automatisation sont constitués en noeuds de capteur/actionneur d'un réseau (N1/N2) de capteur/actionneur.

17. Système suivant la revendication 15 ou 16, comprenant au moins deux réseaux (N1, N2) de capteur/actionneur, les réseaux de capteur/actionneur étant prévu pour la réalisation de tâches d'automatisation différentes et l'unité (3) fonctionnelle d'au moins un composant (1) d'automatisation du deuxième réseau de capteur/actionneur étant prévue pour l'activation par réception d'un signal (S) radio d'un composant (1) d'automatisation du premier réseau (N1) de capteur/actionneur.
